# FASCICULE DE BREVET EUROPEEN

(11) **EP 3 322 673 B1**
(45) Date de publication et mention de la délivrance du brevet: **09.09.2020**
(21) Numéro de dépôt: 16750959.5
(22) Date de dépôt: 13.07.2016
(51) Int. Cl.: C01F 7/16, C04B 7/32

(54) **PROCÉDÉ DE FABRICATION D'ALUMINATES DE CALCIUM**
VERFAHREN ZUR HERSTELLUNG VON CALCIUMALUMINATEN
PROCESS FOR MANUFACTURING CALCIUM ALUMINATES

(30) Priorité: 15.07.2015 FR 1556686
(43) Date de publication de la demande: 23.05.2018
(73) Titulaire: Kerneos, 92800 Puteaux (FR)
(72) Inventeur: VALERO, Rémi, 01600 Parcieux (FR); DEFFRASNES, Philippe, 26200 Montelimar (FR); SEVER, Lionel, 13920Saint Mitre Les Remparts (FR); SCHROEDER, Franck, 17180 Perigny (FR)
(74) Mandataire: Lavoix
(86) Numéro de dépôt international: PCT/FR2016/051811
(87) Numéro de publication internationale: WO 2017/009581

(56) Documents cités:
- DE-A1- 2 116 495
- FR-A- 1 013 973
- FR-A1- 2 291 162
- GB-A- 146 133

## Description

### DOMAINE TECHNIQUE AUQUEL SE RAPPORTE L'INVENTION

La présente invention se rapporte à la production d'aluminates de calcium.

Elle concerne plus particulièrement un procédé de fabrication en continu d'aluminates de calcium mettant en œuvre un four de fusion industriel.

### ARRIERE-PLAN TECHNOLOGIQUE

Les aluminates de calcium, de par leurs propriétés hydrauliques et liantes, permettent de fabriquer des ciments ou des bétons présentant de nombreuses qualités. Les ciments alumineux résistent en effet bien aux agents agressifs et aux hautes températures. Ils sont à l'origine de nombreux produits techniques tels que des mortiers spéciaux, des bétons réfractaires, etc. Ils peuvent également être utilisés comme réactif minéral associé à d'autres composants. Ils sont ainsi utilisés dans diverses industries, telles que l'industrie du réfractaire, de la chimie de la construction, des flux métallurgiques (piégeage des impuretés des métaux en fusion), ou encore dans l'industrie des tuyaux et réseaux d'assainissement.

Les aluminates de calcium peuvent présenter différentes phases minéralogiques telles que 3CaO.Al₂O₃ (C3A en notation cimentaire), CaO.Al₂O₃ (CA), CaO.2Al₂O₃ (CA2), CaO.6Al₂O₃ (CA6) ou encore 12CaO.7Al₂O₃ (C12A7), Ces phases minéralogiques, qui rendent compte tant de la structure à l'échelle atomique que de la composition chimique des aluminates de calcium, influent sur les propriétés finales, par exemple sur la réactivité, desdits aluminates de calcium.

En outre, les propriétés finales, et notamment réactives, des produits à base d'aluminates de calcium reposent en partie sur la quantité d'alumine (Al₂O₃) et/ou d'aluminium (Al) et d'oxyde de calcium (ou chaux CaO) et/ou de calcium (Ca) contenue dans l'aluminate de calcium. On qualifie souvent un aluminate de calcium par son ratio massique Al/Ca, à savoir le rapport entre la masse totale d'aluminium et la masse totale de calcium contenue dans l'aluminate de calcium.

Actuellement, les aluminates de calcium sont principalement produits au moyen de deux procédés haute température, à savoir selon un procédé par frittage ou selon un procédé par fusion, dans des fours à ciment tels que des fours de frittage, des fours rotatifs à flamme, des fours de fusion verticaux, ou encore des fours électriques de fusion.

On connait par exemple du document FR2291162 un procédé de production des aluminates de calcium par frittage qui consiste à calciner, c'est-à-dire à chauffer à l'état solide des matières premières sources de calcium, par exemple de la chaux CaO, et des matières premières sources d'aluminium, par exemple de l'alumine Al₂O₃, dans un four rotatif à flamme, à une température comprise entre 1400°C et 1600°C.

D'une façon générale, un four rotatif est constitué d'un tube, légèrement incliné, recouvert sur sa face intérieure de briques réfractaires, une flamme étant disposée à l'extrémité la plus basse du tube. Les sources de calcium et d'aluminium sont alors introduites dans le four par l'extrémité la plus élevée. Elles sont ensuite généralement chauffées à une température comprise entre 1400 et 1600 degrés Celsius (°C) pendant une durée d'environ 30 minutes avant d'être évacuées dans la partie basse, à proximité de la flamme.

Un tel procédé par frittage consiste en une réaction de surface entre les matières premières poudreuses qui réagissent ensemble sans passer par un état liquide généralisé.

Selon le procédé décrit dans ce document FR2291162, les matières premières utilisées doivent présenter une granulométrie inférieure à 208 micromètres pour permettre leur calcination. Le clinker obtenu présente plus de 80% de phase minéralogique CA.

Il est donc nécessaire de moudre très finement les matières premières, ce qui est coûteux et contraignant.

On connait par ailleurs du document FR1013973, un procédé de production des aluminates de calcium par fusion selon lequel on chauffe jusqu'à l'état liquide des matières premières sources de calcium et d'aluminium dans un four tournant à flamme, à des températures voisines de 1430°C à 1450°C.

Les matières premières sources de calcium (le calcaire CaCO₃) et d'aluminium (la bauxite ferrugineuse, une roche minérale riche en alumine et contenant du fer, de la silice et d'autres composés en quantités variables) utilisées dans un tel procédé sont d'abord moulues très finement de façon à passer au tamis n°4900, puis mélangées et compactées pour être mises sous forme de briquettes. Les briquettes présentent généralement une dimension moyenne comprise entre 15 millimètres (mm) et 20 centimètres (cm).

Selon le procédé décrit dans ce document FR1012973, on procède de manière discontinue et séquencée : on charge d'abord les briquettes de matière première, on chauffe ensuite ces briquettes de matière première en faisant tourner lentement le four jusqu'à obtention d'une masse fondue uniforme, et l'on vide enfin par un tube de coulée la masse fondue. En pratique, on récupère la masse fondue immédiatement après avoir atteint les températures de fusion des matières premières.

On connaît d'autre part du document DE2116495, un procédé de production de sulfo-aluminates de calcium par fusion dans un four électrique.

Les matières premières utilisées dans ce procédé sont une source d'alumine dont la granulométrie moyenne (c'est-à-dire la valeur maximale de la distribution granulométrique) est inférieure à 5 mm et une source d'oxyde de calcium telle que de la chaux dont la granulométrie moyenne est une à dix fois supérieure à celle de l'alumine.

Le procédé décrit dans ce document DE2116495 est un procédé séquencé, une séquence correspondant à la charge des matières premières, à leur fusion, et à une décharge partielle de la masse fondue.

Ainsi, ces procédés par fusion connus sont mis en œuvre dans des fours dans lesquels il est nécessaire d'opérer de manière séquencée et discontinue.

En outre, les fours de fusion connus présentent plusieurs modes de fonctionnement (par exemple un mode de fonctionnement en charge et un mode de fonctionnement en décharge) et leur opération nécessite de nombreux passages d'un mode de fonctionnement à un autre.

On sait enfin qu'un four de fusion vertical peut être utilisé pour réaliser des procédés par fusion.

Ce four de fusion vertical présente une partie verticale dont la hauteur peut atteindre une dizaine de mètres et une partie globalement horizontale à partir de laquelle on récupère la masse liquide d'aluminates de calcium obtenue.

Plus particulièrement, on charge par une ouverture d'une zone supérieure du four des blocs de calcaire et de bauxite dans la partie verticale du four de fusion et on les chauffe par une flamme disposée dans une zone inférieure du four. La flamme chauffe les blocs à une température voisine de 1 500°C pour les faire fondre et former une masse liquide qui est directement récupérée par un trou de coulée.

Au cours du procédé, des gaz de combustion se forment et prennent un chemin à contre-courant de celui des blocs. Ils sont évacués par une cheminée située dans la zone supérieure du four, dans sa partie verticale. Ces gaz de combustion, présentant une température supérieure à 1500°C, circulent entre les blocs et les préchauffent.

Avant d'être mis au contact de la flamme, les blocs de matières premières subissent ainsi un séchage, puis une déshydratation et une décarbonatation par les gaz de combustion remontant la partie verticale du four de fusion.

Un tel procédé impose l'utilisation de matières premières en blocs à l'exclusion de fines particules qui entraineraient des blocages et endommagements de la partie verticale de ce four de fusion.

Ainsi, les procédés de production d'aluminates de calcium par fusion ou par frittage connus sont tous contraignants en termes de granulométrie des matières premières utilisées (mouture fine des matières premières ; mouture puis compactage sous forme de briquettes ; rapport de granulométrie spécifique entre la chaux et l'alumine ; ou encore utilisation de blocs de bauxite).

Notamment, dans le cas du procédé par fusion dans le four de fusion vertical, les blocs de bauxite sont de moins en moins disponibles sur le marché. En outre, lors de l'extraction, le rendement de production des blocs de bauxite est faible. En effet, pour 100 tonnes de minerai extrait, on obtient seulement 10 tonnes de bauxite brute comprenant elles-mêmes 8 tonnes de fines particules non utilisables dans le procédé par fusion dans le four vertical, et 2 tonnes de bauxite en blocs utilisables, accompagnés de 90 tonnes de stériles non utilisables par les industries.

### OBJET DE L'INVENTION

Afin de remédier aux inconvénients précités de l'état de la technique, la présente invention propose un procédé de fabrication d'aluminates de calcium par fusion peu contraignant en ce qui concerne la granulométrie des matières premières, qui ne nécessite pas l'emploi de blocs de bauxite et qui permet de valoriser les fines particules des matières premières extraites qui sont disponibles sur le marché. En outre, la présente invention propose un procédé dans lequel les changements de mode de fonctionnement du four sont limités.

Plus particulièrement, l'invention propose un procédé de fabrication d'aluminates de calcium selon la revendication 1.

Le diamètre médian d50 d'un ensemble quelconque de particules est une grandeur représentative de la distribution statistique des tailles de ces particules, autrement dit de la granulométrie de cet ensemble de particules.

Le diamètre médian d50 est un diamètre de référence défini comme le diamètre en-dessous duquel se situe 50% des fines particules utilisées, en masse par rapport à la masse totale de l'ensemble desdites fines particules.

Autrement dit, pour un ensemble de fines particules présentant un diamètre médian d50 donné, 50% en masse de ces fines particules présente un diamètre inférieur à ce diamètre médian d50 donné, et 50% en masse de ces fines particules présente un diamètre supérieur à ce diamètre médian d50 donné.

On entend ici par « diamètre » la plus grande dimension de la particule, quelle que soit sa forme.

Le diamètre médian d50 d'un ensemble de fines particules est obtenu à partir d'une courbe granulométrique représentant la répartition statistique de la taille de chacune des fines particules de cet ensemble.

En pratique, le diamètre médian d50 d'un ensemble de fines particules peut être déterminé par différentes techniques, telles que la méthode de sédimentation (détection par absorption des RX) ou la méthode de diffraction par laser (norme ISO 13320).

Dans le cadre de la présente invention, la taille des fines particules est mesurée selon la norme ISO 13320 par la méthode de diffraction laser avec, par exemple, un granulomètre du type laser Mastersizer 2000 ou 3000 commercialisé par la société Malvern.

De manière avantageuse, le procédé selon l'invention permet d'utiliser aussi bien des particules très fines que des particules fines de matières premières.

Autrement dit, grâce au procédé selon l'invention, les contraintes granulométriques sur les matières premières utilisées sont fortement réduites.

Notamment, grâce au procédé selon l'invention, il n'est pas nécessaire d'utiliser des particules sous forme de blocs, ni de compacter des particules déjà fines, ni de réduire sous forme de poudre très fine les particules.

En outre, grâce au procédé selon l'invention, l'introduction des matières premières et la récupération de la masse d'aluminates de calcium liquide sont réalisées en continu, tout au long du fonctionnement du four. Le four fonctionne donc essentiellement selon un mode de fonctionnement stable, sans passages d'un mode de fonctionnement en charge à un mode de fonctionnement en décharge. Dans ce mode de fonctionnement stable du four selon la méthode de l'invention, les paramètres usuels de fonctionnement du four, tels que la température de chauffage, la granulométrie des particules introduites, la composition chimique des matières premières introduites peuvent être ajustés.

Avantageusement, le procédé de fabrication selon l'invention utilise des fines particules de matière première, non valorisées dans la technologie actuelle, issues de l'extraction et du traitement de minerai pour fabriquer par fusion des aluminates de calcium.

Ainsi, le procédé selon l'invention permet d'utiliser des matières premières inutilisables dans le procédé par fusion dans les fours à fusion verticaux actuels.

En outre, ici, ces fines particules sont directement plongées dans un bain d'aluminates de calcium chauffé à une température permettant leur fusion. On récupère ainsi en sortie de cuve une masse d'aluminate de calcium liquide homogène, c'est-à-dire sans infondu.

On entend par « infondus » des particules de matière première encore sous forme solide, qui n'auraient pas réagi au cours du procédé.

De plus, selon le procédé conforme à l'invention, et contrairement aux procédés existants de l'art antérieur, il est possible d'éviter la réalisation des étapes préalables de déshydratation et de décarbonatation des matières premières utilisées, cette déshydratation et cette décarbonatation intervenant directement dans le bain de fusion.

D'ailleurs, selon le procédé conforme à l'invention, les bulles générées par la décarbonatation des matières premières lors de leur fusion dans le bain de fusion participent naturellement au brassage de ce bain de fusion. Ce brassage naturel mélange les fines particules solides à la matière liquide contenue dans le bain de fusion, favorisant ainsi la fusion desdites fines particules. Par conséquent, ce brassage naturel participe à l'amélioration de l'homogénéité de la masse liquide d'aluminates de calcium obtenue. Le procédé selon l'invention stabilise ainsi la qualité des produits finis obtenus.

D'autres caractéristiques avantageuses et non limitatives du procédé conforme à l'invention sont énoncées aux revendications 2 et 3.

Avantageusement, l'atmosphère réductrice dans laquelle est placé le bain de fusion permet de maîtriser, au moins en partie, les phases minéralogiques des aluminates de calcium obtenus, pour une proportion donnée de chaux et d'alumine contenue dans ledit aluminate de calcium.

Les « phases minéralogiques » décrivent à la fois la structure à l'échelle atomique et la composition chimique de l'aluminate de calcium. Par exemple, ces phases minéralogiques sont : la phase C3A (3CaO.Al₂O₃), la phase CA (CaO.Al₂O₃), la phase CA2 (CaO.2Al₂O₃), la phase CA6 (CaO.6Al₂O₃) ou encore la phase C12A7 (12CaO.7Al₂O₃).

Les aluminates de calcium utilisés en tant que liants hydrauliques, c'est-à-dire en tant que matériau apte à réagir avec de l'eau pour former une pâte qui durcit à froid en agglomérant des agrégats entre eux, contiennent en général une quantité importante de phase minéralogique CA, laquelle permet le développement de résistances mécaniques élevées après la prise hydraulique.

On appelle « prise hydraulique » le durcissement du liant hydraulique.

Il s'avère en outre que la phase minéralogique C12A7 influence la réactivité de l'aluminate de calcium utilisé en tant que liant hydraulique.

Plus précisément, la phase minéralogique C12A7 est un accélérateur de prise de l'aluminate de calcium dont la phase principale est la phase minéralogique CA. Autrement dit, les aluminates de calcium durcissent d'autant plus vite au contact de l'eau qu'ils contiennent une grande proportion de phase minéralogique C12A7, par rapport aux autres phases minéralogiques éventuellement contenues dans ledit aluminate de calcium.

Ainsi, la phase minéralogique C12A7 a un impact fort sur l'ouvrabilité du liant hydraulique, et sur son durcissement à court terme. En particulier, une variation de la proportion massique de la phase C12A7 dans l'aluminate de calcium de quelques pourcents, voire inférieure à 1 pourcent, peut avoir des conséquences mesurables sur l'ouvrabilité et le durcissement du liant hydraulique.

Les aluminates de calcium pouvant être utilisés pour diverses applications, en fonction desquelles un utilisateur préférera une prise hydraulique rapide ou lente, il est tout particulièrement intéressant de pouvoir maîtriser la proportion de phase minéralogique C12A7 contenue dans les aluminates de calcium. La proportion cible de phase minéralogique C12A7 contenue dans l'aluminate de calcium destiné à une application donnée est par exemple déterminée avec une précision comprise entre 0,1% et 0,5%, par exemple égale à 0,1% ; 0,2% ; 0,3% ; 0,4% ; 0,5%.

Avantageusement, le procédé selon l'invention permet une telle maîtrise.

D'autres caractéristiques non limitatives et avantageuses du procédé conforme à l'invention, prises individuellement ou selon toutes les combinaisons techniquement possibles, sont énoncées aux revendications 4 à 14.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une courbe granulométrique d'un premier ensemble de particules de bauxite convenant pour le procédé selon la présente invention ;
- la figure 2 est un diagramme en barres représentant la répartition des diamètres d'un deuxième ensemble de particules de bauxite convenant pour l'invention ;
- la figure 3 est un diagramme en barres représentant la répartition des diamètres d'un troisième ensemble de particules de bauxite convenant pour l'invention ;
- la figure 4 est un diagramme en barres représentant la répartition des diamètres d'un quatrième ensemble de particules de bauxite convenant pour l'invention ; et
conforme à l'invention.

Dans la suite de la description et à moins qu'il n'en soit spécifié autrement, l'indication d'un intervalle de valeurs « de X à Y » ou « entre X et Y » s'entend comme incluant les valeurs X et Y.

### Dispositif

Sur la figure 5, on a représenté partiellement et schématiquement un exemple de four 1 adapté à la mise en œuvre du procédé de fabrication d'aluminates de calcium selon la présente invention.

Globalement, ce four 1 comprend une cuve 15 horizontale - une sorte de piscine - recouverte par une voûte 5, et une ouverture d'échappement des fumées (non représentée).

Cette cuve 15 est adaptée à contenir un bain de fusion 11 obtenu et maintenu à l'état liquide par un système de chauffage 10 du four 1.

La cuve 15 est également adaptée à recevoir par une ouverture d'entrée 9 des matières premières 7 solides et à évacuer par une ouverture de sortie 12 des matières fondues, à savoir une masse d'aluminates de calcium 16 liquide.

A cet effet, le four 1 comporte un système d'enfournement 2 des matières premières 7 relié à l'ouverture d'entrée 9 de la cuve 15, et un système d'évacuation 3 des matières fondues relié à l'ouverture de sortie 12 de la cuve 15.

Comme expliqué en détails plus loin, cet agencement crée un flux de matière entre l'entrée 9 de la cuve 15 et la sortie 12 de cette cuve 15.

Dans ce four 1, il existe donc un véritable flux de matière alimenté par les matières premières 7 introduites en continu par l'ouverture d'entrée 9, qui sont transformées dans le bain de fusion 11 en aluminates de calcium liquides, eux-mêmes évacués par l'ouverture de sortie 12.

On parlera dans la suite de « temps de séjour » pour désigner le temps qui s'écoule entre l'introduction d'une particule de matière première dans le bain de fusion 11 de la cuve 15 du four 1 et son évacuation par l'ouverture de sortie 12.

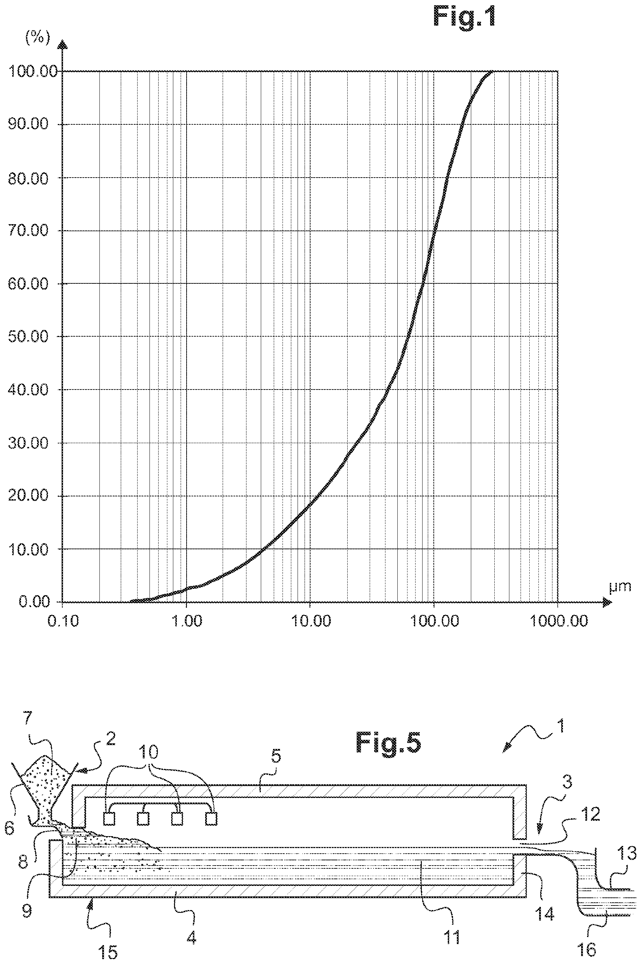

Plus précisément, comme le montre la figure 5, la cuve 15 délimite ici un volume globalement parallélépipédique.

Les parois de cette cuve 15 comportent en particulier une sole 4 constituant le fond de la cuve 15 et une paroi périphérique 14 qui s'élève verticalement à partir de la sole 4.

La sole 4 présente ici une forme rectangulaire de sorte que la paroi périphérique 14 comporte quatre panneaux disposés deux à deux à angle droit.

Bien entendu selon d'autres modes de réalisation du four, la cuve pourra présenter une forme différente. En particulier, la sole et la paroi périphérique pourraient présenter des formes différentes et former entre elles des angles différents afin d'optimiser l'écoulement entre l'entrée et la sortie de la cuve mais aussi la répartition de la matière première dans le bain de fusion et l'évacuation de la matière fondue.

Un de ces quatre panneaux de la paroi périphérique 14, appelé panneau d'entrée, comporte l'ouverture d'entrée 9 de la cuve 15 permettant au système d'enfournement 2 des matières premières 7 d'accéder à la cuve 15.

Le panneau opposé au panneau d'entrée, appelé panneau de sortie, comporte l'ouverture de sortie 12 de la cuve 15, aussi appelée trou de coulée, permettant de relier la cuve 15 au système d'évacuation 3 des matières fondues.

Le passage du flux de matières se fait ainsi dans le sens longitudinal du four 1, depuis l'ouverture d'entrée 9 vers l'ouverture de sortie 12 de la cuve 15.

La matière première séjourne plus ou moins longtemps dans la cuve 15 en fonction de la taille de cette cuve 15.

La surface du laboratoire de la cuve 15, c'est-à-dire la surface interne de la cuve 15 destinée à être en contact avec le bain de fusion 11, est comprise entre 20 m² et 200 m², de préférence elle est égale à environ 100 m².

Les parois de la cuve 15 et de la voûte 5 sont revêtues intérieurement d'un matériau réfractaire inerte chimiquement avec les aluminates de calcium.

Le matériau réfractaire de la cuve 15 et/ou de la voûte 5 est choisi parmi les matériaux réfractaires agglomérés ou les matériaux réfractaires électrofondus et/ou un de leurs mélanges.

Plus précisément, la nature des matériaux réfractaires utilisés peut être fonction de leur emplacement dans le four (voûte, cuve) et des sollicitations associées. Ainsi, il est possible d'utiliser des matériaux réfractaires agglomérés ou électrofondus pour la voûte 5 et des matériaux réfractaires électrofondus pour la cuve 15.

Ces deux familles de matériaux réfractaires agglomérés et électrofondus se différencient en premier lieu par leurs procédés de mise en forme : un coulage de type fonderie pour les matériaux réfractaires électrofondus et un frittage dans le cas des matériaux réfractaires agglomérés.

Ainsi, les matériaux réfractaires agglomérés sont des matériaux céramiques frittés, à gros ou petits grains, obtenus par pressage unidirectionnel ou isostatique, par vibrocoulage ou par coulage en barbotine. Ils sont caractérisés par une porosité ouverte pouvant atteindre 20%, réduite dans le cas des matériaux pressés isostatiquement. Dans cette catégorie, on distingue plusieurs compositions chimiques de produits réfractaires. Les compositions chimiques les plus courantes de matériaux réfractaires agglomérés sont récapitulées dans le Tableau 1 ci-dessous.

Ces compositions chimiques sont données en pourcentage massique. Le pourcentage massique des composés (MgO, CrO₃, Al₂O₃, ZrO₂, SiO₂, CaO, FeO₃) est parfois donné sous forme A/B, ce qui signifie que le matériau réfractaire aggloméré en question comprend, en masse par rapport à la masse totale dudit matériau réfractaire aggloméré, de A% à B% de composé.

**Tableau 1**

| **Composant** | **MgO** | **CrO₃** | **Al₂O₃** | **ZrO₂** | **SiO₂** | **CaO** | **FeO₃** |
|---|---|---|---|---|---|---|---|
| Magnésie | 95/98 | - | 0,5 | - | 0,4/3 | 1,5/1,8 | 0,5 |
| Magnésie chrome | 50/81 | 15/30 | 4/10 | | 0/1,5 | 0,6/1,8 | 7/18 |
| Magnésie zircon | 73/78 | 6/18 | 1 | 13 | 6/11 | - | 0,8 |
| Spinelle | 29,5 | - | 70 | - | 0,2 | 0,5 | 0,5 |
| Chromite | 25 | 35 | - | - | - | - | 15 |
| Alumine Silice | | | 50/65 | | 30/40 | | 0/1 |
| Alumine Chrome | | 10/30 | 60/85 | 1/4 | 1/3 | | 0/1 |
| Alumine Spinelle | 4/6 | | 90/96 | | | | |

Les matériaux réfractaires électrofondus présentent une plus faible porosité que les matériaux réfractaires agglomérés. Ils présentent également une organisation de la structure cristalline permettant d'augmenter considérablement leur résistance à la corrosion.

On distingue principalement quatre familles de matériaux réfractaires électrofondus : les Alumine - Zircone - Silice (AZS), les Alumine - Zircone - Silice - Chrome (AZSC), les Très Haute Teneur en Zircone (THTZ) et les Haute teneur en Alumine (HA).

Le tableau 2 ci-dessous récapitule les compositions chimiques de quelques matériaux réfractaires électrofondus. Ces compositions chimiques sont données en pourcentage massique. Comme dans le tableau 1, le pourcentage massique des composés est parfois donné sous forme A'/B', ce qui signifie que le matériau réfractaire électrofondu en question comprend, en masse par rapport à la masse totale dudit matériau réfractaire électrofondu, de A'% à B'% de composé.

**Tableau 2**

| **Composant** | **Al₂O₃** | **ZrO₂** | **SiO₂** | **Na₂O** | **CaO, TiO₂, Fe₂O₃** | **Cr₂O₃** |
|---|---|---|---|---|---|---|
| AZS | 46/51 | 32/41 | 12/15 | 1,13 | 0,3 | - |
| THTZ | 0,85 | 94 | 4,5 | 0,4 | 0,3 | - |
| AZSC | 28 | 27 | 14 | 1,1 | 2,4 | 27 |
| HA | 95 | | | 4 | 0,5 | |

La cuve 15 ainsi formée est adaptée à contenir le bain de fusion 11. Ce bain de fusion 11 est ici est bain d'aluminate de calcium en fusion.

Le système de chauffage 10 est adapté à chauffer en permanence le bain de fusion 11 contenu dans la cuve 15.

Ici, le système de chauffage 10 équipe la face intérieure de la voûte 5.

Il s'agit préférentiellement d'un système de chauffage 10 par combustion qui comporte des brûleurs à flamme tels que des brûleurs à fioul ou à gaz.

Par exemple, il s'agit d'un système de chauffage à aérocombustion dans lequel le comburant est le dioxygène (O₂) provenant de l'air.

On pourrait également prévoir un système de chauffage à oxycombustion dans lequel le comburant serait du dioxygène (O₂) provenant d'une source de dioxygène pur.

En outre, le four 1 peut éventuellement comprendre un système régénérateur de chaleur ici non représenté.

Ce système régénérateur est réalisé en matériaux réfractaires tels que ceux utilisés pour la voûte 5 ou la cuve 15.

Avantageusement, ce système régénérateur de chaleur est généralement associé au système de chauffage 10 pour recycler l'énergie de combustion. Il permet d'augmenter les rendements thermiques du four. Il s'agit par exemple d'empilages de briques réfractaires traversés par de nombreux canaux où circulent alternativement les gaz issus de la combustion et l'air ou le dioxygène pur servant à la combustion : les gaz cèdent leur énergie aux briques qui la restituent lors du passage de l'air ou du dioxygène pur.

Selon une variante du four non représentée, on pourrait prévoir que le système de chauffage du bain de fusion soit électrique.

Ce système de chauffage pourrait par exemple comprendre des électrodes plongeantes ou des électrodes disposées en fond de cuve.

Ces électrodes pourraient être des électrodes en molybdène.

Par ailleurs, d'un point de vue global, la cuve 15 surmontée de la voûte 5 forme une enceinte en partie close contenant le bain de fusion 11.

Il est possible de choisir la composition des gaz contenus dans cette enceinte au-dessus de la cuve 15.

Avantageusement, ici, l'enceinte en partie close est adaptée à accueillir un mélange de gaz contenant du monoxyde de carbone (CO) qui forme une atmosphère réductrice au-dessus de la cuve 15.

Plus précisément, ladite atmosphère réductrice comprend les gaz en contact avec la surface du bain de fusion 11 contenu dans la cuve 15.

Avec le système de chauffage 10 par combustion du four 1 décrit ci-dessus, à savoir le système de chauffage à aérocombustion ou le système de chauffage à oxycombustion, l'atmosphère dans l'enceinte contient naturellement du monoxyde de carbone (CO) issu de la combustion.

En particulier, il est possible de maîtriser la teneur en monoxyde de carbone (CO) des gaz contenus dans l'enceinte en maîtrisant précisément la réaction de combustion, et notamment la stœchiométrie des réactifs comburants (O₂) et combustibles (fioul, gaz).

Avantageusement, on pourra également prévoir d'adjoindre un système d'alimentation de l'enceinte en monoxyde de carbone (CO) (non représenté).

Dans le four 1 présentant le système de chauffage 10 par combustion, la teneur en monoxyde de carbone (CO) n'est pas homogène dans toute l'enceinte, c'est-à-dire qu'elle n'est pas identique en tous les points de l'enceinte. En général, pour les raisons de stœchiométrie énoncées plus haut, elle est généralement plus forte près des brûleurs à flammes.

On parlera alors de teneur « moyenne » en monoxyde de carbone (CO). Cette teneur « moyenne » en monoxyde de carbone (CO) est évaluée dans les gaz évacués de l'enceinte à travers l'ouverture d'échappement des fumées (non représentée) du four 1. Elle est par exemple mesurée par un capteur disposé dans un conduit d'échappement de fumée dans lequel débouche ladite ouverture d'échappement des fumées.

Dans le cas de la variante comprenant le système de chauffage électrique, le four sera nécessairement muni d'un système d'adjonction artificiel de monoxyde de carbone (CO).

Le four électrique pourra également comprendre un moyen de contrôle de la teneur en monoxyde de carbone (CO) de l'atmosphère contenue dans l'enceinte.

Ce moyen de contrôle de la teneur en monoxyde de carbone (CO) permet de régler précisément la teneur en monoxyde de carbone (CO) dans l'enceinte.

Le monoxyde de carbone (CO) est par exemple injecté pur dans l'enceinte où il se mélange avec l'air ambiant. Il peut également être introduit directement en mélange avec de l'air.

Il peut aussi être injecté pur de manière à ce que l'enceinte ne comprenne que du monoxyde de carbone (CO).

D'autre part, comme le montre bien la figure 5, le système d'enfournement 2 du four 1 est raccordé à l'ouverture d'entrée 9 de la cuve 15.

Ce système d'enfournement 2 comprend un silo 6 en forme d'entonnoir permettant le stockage, voire l'homogénéisation des matières premières 7, et une rampe d'accès 8 permettant l'introduction de ces matières premières 7 dans la cuve 15 via l'ouverture d'entrée 9 de cette cuve 15.

La rampe d'accès 8 est un conduit dont une extrémité est raccordée à la sortie du silo 6 et dont l'autre extrémité débouche dans l'ouverture d'entrée 9 de la cuve 15.

Les matières premières 7 peuvent circuler par gravité depuis le silo 6 jusqu'à l'entrée de la cuve 15 via la rampe d'accès 8. Un système de poussoir (non représenté) peut être prévu pour forcer cette circulation.

En pratique, ici lesdites matières premières 7 comprennent une matière première source d'alumine (Al₂O₃) et/ou d'aluminium (Al), et une matière première source d'oxyde de calcium (CaO) et/ou de calcium (Ca).

Ladite matière première source d'alumine (Al₂O₃) et/ou d'aluminium (Al) désigne tout composé chimique comprenant un groupement d'atome Al₂O₃ et/ou un atome d'aluminium.

Similairement, ladite matière première source d'oxyde de calcium (CaO) et/ou de calcium (Ca) désigne tout composé chimique comprenant un groupement d'atome CaO et/ou un atome de calcium.

Ainsi, en variante, le silo 6 peut éventuellement comprendre deux compartiments distincts (non représentés) adaptés à recevoir respectivement ladite matière première source d'alumine (Al₂O₃) et/ou d'aluminium (Al), et ladite matière première source d'oxyde de calcium (CaO) et/ou de calcium (Ca). On pourrait par exemple envisager que ces compartiments distincts débouchent en aval dans une partie commune du silo 6 située en amont de la sortie dudit silo 6. Dans cette partie commune, ladite matière première source d'alumine (Al₂O₃) et/ou d'aluminium (Al) et ladite matière première source d'oxyde de calcium (CaO) et/ou de calcium (Ca) sont alors mélangées pour former les matières premières 7.

Quelle que soit la variante envisagée du système d'enfournement 2, ce système d'enfournement 2 permet d'alimenter le bain de fusion 11 en matières premières 7, et ce de manière continue.

De plus, comme le montre bien la figure 5, le système d'évacuation 3 du four 1 est raccordé à l'ouverture de sortie 12 de la cuve 15.

Le système d'évacuation 3 de la masse d'aluminates de calcium 16 liquide comprend un conduit d'évacuation 13 raccordé d'un côté à l'ouverture de sortie 12 de la cuve 15, et qui débouche, de l'autre côté, sur une zone de refroidissement (non représentée) des aluminates de calcium.

L'ouverture de sortie 12 de la cuve 15 est une sortie dite « à débordement » dans la mesure où la matière fondue, à savoir l'aluminate de calcium fondu, est évacuée de la cuve 15 par débordement de celle-ci dans le conduit d'évacuation 13.

Avantageusement, cette ouverture de sortie 12 à débordement est compatible avec les très grandes températures du bain de fusion 11.

### Procédé

Dans la suite de la description, nous allons détailler plus spécifiquement le procédé de fabrication d'aluminates de calcium mis en œuvre par un opérateur dans le four 1 industriel décrit précédemment.

De façon remarquable, selon ce procédé :
a) on introduit, en continu, dans la cuve 15 en matériau réfractaire contenant le bain de fusion 11 chauffé en permanence, des fines particules de ladite matière première source d'alumine (Al₂O₃) et/ou d'aluminium (Al) et de ladite matière première source d'oxyde de calcium (CaO) et/ou de calcium (Ca) présentant un diamètre médian d50 inférieur ou égal à 6 000 µm pour faire fondre lesdites fines particules de matière première, et
b) on récupère, en continu, en sortie de cuve 15, une masse d'aluminates de calcium 16 liquide.

Dans une étape préalable à l'étape a), l'opérateur prépare le bain de fusion 11.

Pour cela, à la mise en service du four 1, la cuve 15 est initialement chargée en un mélange préliminaire d'aluminates de calcium.

Ce mélange préliminaire est chauffé par le système de chauffage 10 de manière à obtenir une masse liquide, sans infondu, d'aluminate de calcium en fusion. Cette masse liquide forme alors le bain de fusion initial présent dans la cuve 15 au début de la mise en œuvre du procédé de fabrication selon l'invention.

Le bain de fusion 11 est formé par ce bain de fusion initial, auquel on ajoute ladite matière première source d'alumine (Al₂O₃) et/ou d'aluminium (Al), et ladite matière première source d'oxyde de calcium (CaO) et/ou de calcium (Ca), qui vont fondre à leur tour.

Ainsi, dans la suite de la description, le bain de fusion 11 désigne une masse liquide, sans infondus, d'aluminate de calcium en fusion.

Le volume du bain de fusion initial est tel qu'il affleure l'ouverture de sortie 12 à débordement de la cuve 15.

Le ratio massique Al/Ca du mélange préliminaire d'aluminate de calcium initialement chargé dans la cuve 15, à savoir le rapport entre la masse totale d'aluminium (Al) et la masse totale de calcium (Ca) contenue dans ce mélange préliminaire, est proche de celui de l'aluminate de calcium que l'opérateur souhaite récupérer en sortie de cuve 15, mais pas nécessairement identique à celui-ci.

En effet, le ratio massique Al/Ca de l'aluminate de calcium contenu dans la cuve 15 - c'est-à-dire formant le bain de fusion 11 - évolue au cours du procédé, par l'introduction, à l'étape a), des matières premières 7. Ainsi, il faut bien comprendre que le ratio massique Al/Ca de l'aluminate de calcium récupéré en sortie de cuve 15 peut être différent de celui de l'aluminate de calcium initialement chargé dans la cuve 15.

Le ratio massique Al/Ca de l'aluminate de calcium récupéré en sortie de cuve 15 tend à devenir égal au ratio massique Al/Ca des matières premières introduites.

Ainsi, il existe un régime transitoire au cours duquel le ratio massique Al/Ca de l'aluminate de calcium récupéré en sortie de cuve est différent du ratio massique Al/Ca des matières premières introduites.

A la fin du régime transitoire, le ratio massique Al/Ca de l'aluminate de calcium récupéré en sortie de cuve devient égal au ratio massique Al/Ca des matières premières introduites en entrée de cuve.

De façon classique, on estime que la durée du régime transitoire est au maximum égale à 5 fois le temps de séjour des particules dans la cuve 15.

Par exemple, pour un temps de séjour d'environ 1 heure, on estime que le régime transitoire est terminé au bout de 5 heures.

A l'étape a), l'opérateur charge le système d'enfournement 2 en matière première 7 contenant une matière première source d'alumine (Al₂O₃) et/ou d'aluminium (Al), et une matière première source d'oxyde de calcium (CaO) et/ou de calcium (Ca).

A cette étape a), l'opérateur introduit dans le four 1, via l'ouverture d'entrée 9 de la cuve 15, sous forme de fines particules solides, ladite matière première source d'alumine (Al₂O₃) et/ou d'aluminium (Al), et ladite matière première source d'oxyde de calcium (CaO) et/ou de calcium (Ca).

Ici, on entend par « fines particules » une poudre libre présentant un diamètre médian d50 inférieur ou égal à 6 000 µm.

La poudre libre est considérée comme un état fractionné de la matière solide qui se trouve alors sous forme de très petits morceaux.

Avantageusement, une poudre libre ayant un tel diamètre médian d50 présente une grande surface spécifique favorable à sa fusion dans le bain de fusion 11.

Les ensembles de fines particules présentant un diamètre médian d50 inférieur ou égal à 6 000 µm sont par exemple ceux ayant les diamètres médian d50 suivants : 6 mm ; 5 mm ; 4 mm ; 3 mm ; 2 mm ; 1 mm ; 500 µm ; 250 µm ; 150 µm ; 100 µm ; 50 µm ; 25 µm, et inférieurs.

De préférence, le diamètre médian d50 des fines particules convenant pour le procédé selon l'invention est supérieur ou égal à 25 µm et inférieur ou égal à 6 mm.

En effet, des fines particules présentant un diamètre médian d50 inférieur à 25 µm pourraient entraîner un encrassement du four 1. Des fines particules présentant un diamètre médian d50 supérieur à 6 mm pourraient quant à elles amoindrir la production et/ou la qualité des aluminates de calcium en générant des infondus dans le bain de fusion 11, puis en sortie de cuve.

De préférence encore, les fines particules présentent un diamètre médian d50 compris entre 100 µm et 1 000 µm.

Encore plus préférentiellement, elles présentent un diamètre médian d50 compris entre 150 µm et 500 µm.

Idéalement, le diamètre médian d50 des fines particules est de 250 µm.

En outre, le diamètre maximal des fines particules est une autre dimension caractéristique permettant de choisir les fines particules les plus adaptées pour réaliser l'invention.

Le diamètre maximal est un diamètre de référence défini comme le diamètre en-dessous duquel se situe 100% des fines particules utilisées.

Autrement dit, toutes les fines particules de l'ensemble des particules considéré présentent un diamètre inférieur au diamètre maximal.

De préférence, les fines particules présentent un diamètre maximal inférieur ou égal à 20 000 µm, c'est-à-dire inférieur ou égal à 2 cm.

Ainsi, les ensembles de fines particules présentant les diamètres maximaux suivants peuvent convenir pour réaliser l'invention : 20 000 µm ; 19 000 µm ; 18 000 µm ; 17 000 µm ; 16 000 µm ; 15 000 µm ; 14 000 µm ; 13 000 µm ; 12 000 µm ; 11 000 µm ; 10 000 µm ; 9 000 µm ; 8 000 µm ; 7 000 µm ; 6 000 µm ; 5 000 µm ; 4 000 µm ; 3 000 µm ; 2 000 µm ; et inférieurs.

De manière générale, le diamètre maximal des fines particules est choisi de manière à assurer la fusion complète de toutes les fines particules pendant le temps de séjour de ces fines particules dans la cuve du four. Ce diamètre maximal dépend donc de la taille de la cuve du four.

Plus le diamètre maximal des fines particules est grand, plus le temps de séjour permettant la fusion complète de ces fines particules augmente et plus la taille du four doit être grande.

De façon très avantageuse, le procédé selon l'invention est adaptable facilement et rapidement à de nombreuses tailles de particules.

Le diamètre maximal des fines particules utilisées est déterminé en fonction du coût d'achat et/ou de production de ces fines particules et de la taille du four 1.

A ce jour, les particules sont d'autant plus chères qu'elles sont petites car elles nécessitent généralement une étape de broyage. Il est donc intéressant économiquement d'utiliser des particules les plus grosses possibles, qui ne nécessitent ni broyage spécifique ni compactage spécifique. Mais une grande longueur de cuve, nécessaire à la fusion des particules plus grosses, impose une grande taille de four, donc un coût plus élevé pour la construction et l'entretien de ce four.

Dans le cas où le coût d'achat et/ou de production des particules les plus petites diminuerait, il deviendrait probablement avantageux d'utiliser ces particules plutôt que des grosses particules, et le diamètre maximal des particules pourrait être abaissé.

A titre d'exemple, on a représenté sur la figure 1 la courbe granulométrique d'un premier ensemble de fines particules de bauxite pouvant être utilisées dans le procédé conforme à l'invention.

Sur cette figure 1, l'axe des ordonnées donne la quantité de particules exprimée en pourcentage massique par rapport à la masse totale de la quantité totale de particules et l'axe des abscisses donne le diamètre des particules en micromètres (µm) sur une échelle logarithmique.

La courbe granulométrique représentée ici est une courbe dite « cumulée », c'est-à-dire que chaque point de cette courbe granulométrique représente le pourcentage de particules présentant un diamètre inférieur ou égal à celui correspondant au point de la courbe étudié.

Par exemple, cette courbe granulométrique indique que 70% des particules du premier ensemble de particules présentent un diamètre inférieur ou égal à 100 µm.

De même, dans ce premier ensemble de particules, le diamètre médian d50 est égal à 60 µm, c'est-à-dire que 50% des particules du premier ensemble présentent un diamètre inférieur ou égal à 60 µm.

Le diamètre maximal des particules est ici de 300 µm, ce qui signifie que 100% des particules de ce premier ensemble de particules présentent un diamètre inférieur ou égal à 300 µm.

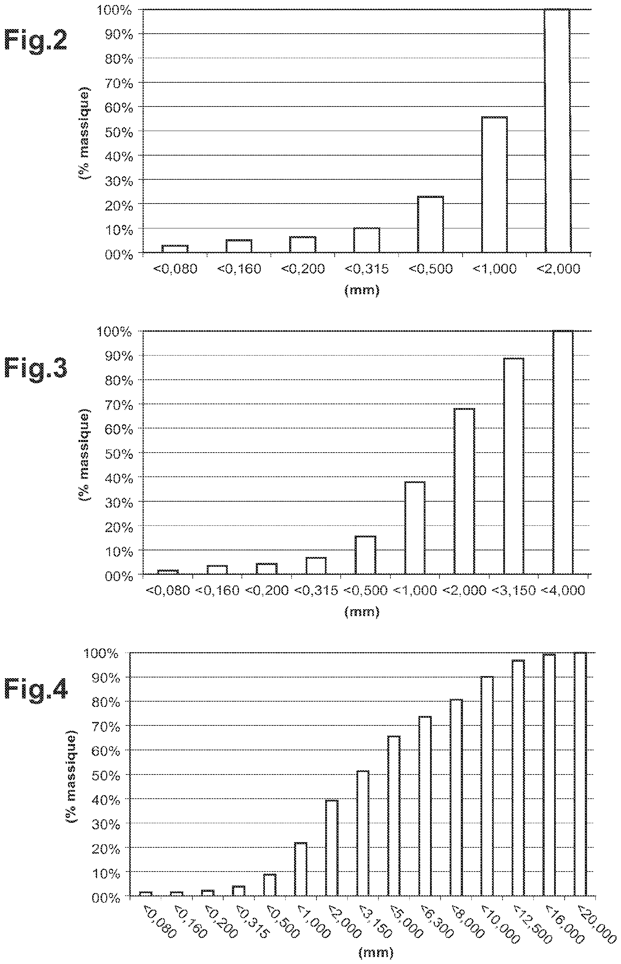

On a représenté sur les figures 2 à 4 les diagrammes granulométriques de deuxième, troisième et quatrième ensembles de fines particules pouvant être utilisées dans le procédé conforme à l'invention.

Les diagrammes en barres des figures 2, 3 et 4, donnent le pourcentage massique de particules présentant un diamètre inférieur ou égal à celui indiqué en bas de chaque barre.

Par exemple, le diagramme en barre de la figure 2 indique que le diamètre médian d50 du deuxième ensemble de particules convenant pour l'invention est compris entre 0,5 millimètre (mm) et 1 mm. On peut estimer que ledit diamètre médian d50 vaut dans ce cas environ 0,9 mm.

Sur cette figure 2, on voit que le diamètre maximal des particules de ce deuxième ensemble est de 2 mm.

De façon similaire, les diagrammes en barres des figures 3 et 4 indiquent respectivement que le diamètre médian d50 du troisième ensemble de particules fines convenant pour l'invention est compris entre 1 mm et 2 mm, et que le diamètre médian d50 du quatrième ensemble de particules fines convenant pour l'invention est compris entre 2 mm et 3,15 mm.

On peut estimer que ledit diamètre médian d50 vaut environ 1,4 mm pour le troisième ensemble de particules correspondant au diagramme représenté sur la figure 3, et environ 3 mm pour le quatrième ensemble de particules correspondant au diagramme représenté sur la figure 4.

Le diamètre maximal des particules du troisième ensemble correspondant au diagramme représenté sur la figure 3 est de 4 mm. Il est de 20 mm pour le quatrième ensemble de particules correspondant au diagramme représenté sur la figure 4.

De manière générale, le diamètre médian d50 des fines particules peut varier en fonction du type de matières premières 7 utilisées lors de la mise en œuvre du procédé selon l'invention.

En particulier, le diamètre médian d50 des fines particules de matière première source d'alumine et/ou d'aluminium pourra être différent de celui des fines particules source d'oxyde de calcium et/ou de calcium.

Avantageusement, on pourra prévoir selon l'invention de mettre à dimension granulométrique les matières premières source d'alumine (Al₂O₃) et/ou d'aluminium (Al) et source d'oxyde de calcium (CaO) et/ou de calcium (Ca) à l'aide d'un broyeur avant de les introduire dans le bain de fusion 11.

Autrement dit, on pourra prévoir de réduire le diamètre des particules de matières premières de manière à obtenir un ensemble de fines particules dont le diamètre médian d50 est tel que désiré.

Par ailleurs, préférentiellement, la matière première source d'alumine (Al₂O₃) et/ou d'aluminium (Al) comprend, en masse par rapport à la masse totale de ladite matière première source d'alumine (Al₂O₃) et/ou d'aluminium (Al), au moins 30%, voire au moins 40% ou 50%, d'alumine (Al₂O₃) et/ou d'aluminium (Al).

Préférentiellement, la matière première source d'oxyde de calcium (CaO) et/ou de calcium (Ca) comprend, en masse par rapport à la masse totale de ladite matière première source d'oxyde de calcium (CaO) et/ou de calcium (Ca), au moins 50%, voire au moins 70% ou 90%, d'oxyde de calcium (CaO) et/ou de calcium (Ca).

Dans le procédé de fabrication conforme à l'invention, la matière première source d'alumine (Al₂O₃) et/ou d'aluminium (Al) est de préférence choisie parmi : la bauxite telle que la bauxite monohydrate et/ou la bauxite trihydrate, la bauxite blanche, la bauxite rouge, les meules de corindon, les supports de catalyseur, les briques réfractaires, les hydroxydes, les alumines métallurgiques, les alumines calcinées et fondues, les sous-produits de la filière aluminium et les non conforme de fabrication à haute teneur en alumine ou un de leurs mélanges.

Préférentiellement, lors de la mise en œuvre du procédé selon l'invention dans la variante du four présentant le moyen de chauffage électrique, la matière première source d'alumine (Al₂O₃) et/ou d'aluminium (Al) contient peu de fer (Fe).

De préférence également, la matière première source d'oxyde de calcium (CaO) et/ou de calcium (Ca) est choisie parmi : le calcaire, la chaux et les sous-produits provenant de procédés consommateurs de calcaire et/ou de chaux comme les laitiers ou scories de sidérurgie ou d'électrométallurgie, ou un de leurs mélanges.

Les matières premières source d'alumine (Al₂O₃) et/ou d'aluminium (Al), et source d'oxyde de calcium (CaO) et/ou de calcium (Ca) peuvent également contenir du fer (Fe) et de la silice (SiO₂) en quantité variable. Par exemple, la bauxite trihydrate peut comprendre en masse, de 46% à 50% d'alumine (Al₂O₃), de 14% à 20% d'oxyde de fer sous différents degrés d'oxydation et de 7% à 12% de silice (SiO₂).

En outre, les matières premières source d'alumine (Al₂O₃) et/ou d'aluminium (Al), et source d'oxyde de calcium (CaO) et/ou de calcium (Ca) introduites à l'étape a) du procédé selon l'invention sont préférentiellement dosées de sorte que le ratio massique Al/Ca dans le produit fini, c'est-à-dire dans l'aluminate de calcium récupéré en sortie de cuve 15, soit compris entre 0,5 et 1,7, et de préférence entre 0,9 et 1,5.

De façon encore plus préférentielle, le ratio massique aluminium (Al) sur calcium (Ca) dans l'aluminate de calcium récupéré en sortie de cuve 15 est compris entre 1 et 1,1.

Afin de respecter ce ratio massique, la matière première source d'alumine (Al₂O₃) et/ou d'aluminium (Al) et la matière première source d'oxyde de calcium (CaO) et/ou de calcium (Ca) sont dosées, soit lorsqu'elles sont à l'état de fines particules présentant le diamètre médian d50 souhaité, soit avant qu'elles soient réduites pour présenter ledit diamètre médian d50 souhaité.

Ensuite, elles sont mélangées dans un mélangeur pour former les matières premières 7 qui sont introduites dans la cuve 15 du four 1. Ce mélange s'effectue sur les matières premières réduites à l'état de fines particules de diamètre médian d50 souhaité.

Les matières premières 7 comprennent de préférence, en masse par rapport à la masse totale desdites matières premières 7, au moins 70% de l'ensemble formé par l'oxyde de calcium (CaO), l'alumine (Al₂O₃), un oxyde de fer (par exemple Fe₂O₃) et la silice (SiO₂).

En d'autres termes, l'oxyde de calcium (CaO), l'alumine (Al₂O₃), un oxyde de fer (par exemple Fe₂O₃) et la silice (SiO₂) représentent au moins 70% des matières premières 7, en masse par rapport à la masse totale desdites matières premières 7.

Par au moins 70%,on entend que les matières premières 7 peuvent comprendre 70%, 75%, 80%, 85% voire 90% de l'ensemble formé par l'oxyde de calcium (CaO), l'alumine (Al₂O₃), un oxyde de fer (par exemple Fe₂O₃) et la silice (SiO₂), en masse par rapport à la masse totale desdites matières premières 7.

Les matières premières ou les combustibles peuvent contenir d'autres phases mineures et/ou impuretés, telles que des sulfates SO₃. Par exemple, une teneur en sulfate SO₃ inférieure à 4%, en masse par rapport à la masse totale des matières premières 7, en particulier inférieure à 3%, inférieure à 2%, notamment inférieure à 1%, est compatible avec la présente invention.

Les matières premières 7 ne comprennent aucune matière première qui serait spécifiquement source de sulfate de calcium CaSO₄ ou spécifiquement source de composés fluorés.

Autrement dit, aucun sulfate de calcium CaSO₄ ou composés fluorés n'est ajouté spécifiquement aux matières premières 7. Néanmoins, lesdites matières premières 7 comprennent des impuretés et peuvent par conséquent contenir des traces de composés fluorés ou de sulfate de calcium.

Les matières premières 7 peuvent par exemple présenter les compositions décrites dans les tableaux 3 et 4 suivants.

**Tableau 3 - Premier exemple de matières premières 7 utilisées**

| **Composants** | **d50 (µm)** | **Proportion en masse** |
|---|---|---|
| Calcaire | 250 | 48% |
| Bauxite dite blanche | 100 | 48% |
| Silice | 250 | 4% |

**Tableau 4 - Deuxième exemple de matières premières 7 utilisées**

| **Composants** | **d50 (µm)** | **Proportion en masse** |
|---|---|---|
| Calcaire | 250 | 38% |
| Bauxite dite blanche | 100 | 62% |

L'opérateur peut réaliser le dosage et le mélange des matières premières source d'alumine et/ou d'aluminium (Al) et source d'oxyde de calcium (CaO) et/ou de calcium (Ca) avant que lesdites matières premières source d'alumine (Al₂O₃) et/ou d'aluminium (Al) et source d'oxyde de calcium (CaO) et/ou de calcium (Ca) ne soient transportées vers le système d'enfournement 2 du four 1 et en particulier vers le silo 6 de stockage. Ce transport peut s'effectuer par l'intermédiaire d'une pompe ou tout autre moyen de transfert.

En variante, le dosage et le mélange desdites matières premières source d'alumine (Al₂O₃) et/ou d'aluminium (Al) et source d'oxyde de calcium (CaO) et/ou de calcium (Ca) peuvent s'effectuer directement dans le silo 6 du système d'enfournement 2 du four 1 lorsque celui-ci est muni des deux compartiments distincts débouchant dans la partie commune du silo 6.

Avantageusement, selon le procédé de fabrication conforme à l'invention, à l'étape a), la température du bain de fusion 11 est comprise entre 1 300°C et 1 700°C.

De préférence cette température est comprise entre 1 400°C et 1 600°C.

En outre, de façon particulièrement avantageuse, la présente invention propose de maîtriser les pressions partielles de gaz contenus dans l'enceinte formée par la voûte 5 et la cuve 15 du four 1, de manière à obtenir des aluminates de calcium présentant une minéralogie maîtrisée.

Ainsi, avantageusement, également à l'étape a), le bain de fusion 11 est placé sous une atmosphère réductrice.

En chimie, de façon très générale, un réducteur est une espèce chimique capable de céder un ou plusieurs électrons à une autre espèce chimique, appelée oxydant, au cours d'une réaction d'oxydoréduction. A l'inverse, un oxydant est une espèce chimique capable de capter un ou plusieurs électrons au cours d'une réaction d'oxydoréduction.

On entend ici par « atmosphère réductrice » une atmosphère dont la capacité d'oxydation a été réduite en diminuant la proportion d'oxydant qu'elle contient.

En particulier, ici, l'atmosphère réductrice contient une teneur réduite, par rapport à l'air, en dioxygène O₂, qui est un composé oxydant.

En outre, ici, l'atmosphère réductrice comprend une proportion de gaz qui sont plus réducteurs que l'air en général, et que le dioxygène O₂ en particulier.

Ici, ladite atmosphère réductrice sous laquelle est placé le bain de fusion 11 comprend du monoxyde de carbone (CO).

En particulier, le procédé selon l'invention propose de maîtriser la teneur en monoxyde de carbone (CO) contenue dans l'atmosphère située au-dessus du bain de fusion 11.

Ladite teneur moyenne en monoxyde de carbone (CO) de l'atmosphère réductrice est ici comprise entre environ 0,1% et 100%.

La teneur de l'atmosphère réductrice monoxyde de carbone (CO) peut par exemple être égale à 0,09% ; 0,1% ; 0,15% ; 0,2% ; 0,5% ; 0,8% ; 1% ; 5% ; 10% ; 20% ; 30% ; 40% ; 50% ; 60% ; 70% ; 80% ; 90% ; ou 100% de, en mole par rapport à la quantité de matière totale de gaz analysé.

De façon particulièrement avantageuse, la maîtrise de la teneur en monoxyde de carbone (CO) de l'atmosphère réductrice située au-dessus du bain de fusion 11 permet de maîtriser les phases minéralogiques, et notamment la phase minéralogique C12A7, des aluminates de calcium obtenus en sortie de cuve 15.

En effet, le déposant a découvert que lorsque l'atmosphère située au-dessus du bain de fusion 11 est riche en monoxyde de carbone (CO), les aluminates de calcium obtenus sont riches en phase C12A7. L'inverse est également vrai.

Or, il est particulièrement avantageux de maîtriser la proportion de phase minéralogique C12A7 contenue dans l'aluminate de calcium récupéré en sortie de cuve 15 car il s'avère que cette phase minéralogique C12A7 influence la réactivité de cet aluminate de calcium utilisé en tant que liant hydraulique.

Plus précisément, la phase minéralogique C12A7 est un accélérateur de prise des aluminates de calcium. Autrement dit, les aluminates de calcium durcissent d'autant plus vite au contact de l'eau qu'ils contiennent une grande proportion de phase minéralogique C12A7, par rapport aux autres phases minéralogiques éventuellement contenues dans ces aluminates de calcium.

Ainsi, le procédé selon l'invention permet avantageusement de maîtriser la rapidité de prise des aluminates de calcium produits.

En outre, avantageusement, selon l'invention, à l'étape a), le temps de séjour desdites fines particules dans ledit bain de fusion 11 est inférieur à 24 heures.

Ce temps de séjour est de préférence compris entre 30 minutes et 9 heures et encore plus préférentiellement, il est égal à 8 heures.

Ces temps de séjour sont courts, ce qui permet d'assurer un rendement satisfaisant.

Les particules ne présentant pas toutes exactement le même diamètre ne se déplacent pas toutes à la même vitesse dans la cuve 15. Par conséquent, le temps de séjour est ici un temps de séjour moyen desdites particules fines dans le bain de fusion 11.

A l'issue de ce temps de séjour, l'opérateur obtient en sortie de cuve 15 le produit souhaité, à savoir la masse d'aluminates de calcium 16 liquide, sans infondu de matière première.

La masse d'aluminates de calcium 16 liquide est le résultat d'un ensemble de réactions physico-chimiques progressives permettant le séchage, la déshydratation, la décarbonatation des matières premières source d'alumine (Al₂O₃) et/ou d'aluminium (Al) et source d'oxyde de calcium (CaO) et/ou de calcium (Ca) pour former de l'aluminate de calcium.

Lors du procédé selon l'invention, ces réactions physico-chimiques sont réalisées dans le bain de fusion 11 contenu dans la cuve 15 du four 1 et ce, en une seule étape, ce qui est un avantage en ce qui concerne les coûts de fonctionnement.

Au cours de ces réactions physico-chimiques, et lors de la fusion des matières premières 7, des bulles sont générées dans le bain de fusion 11.

Ces bulles, participent par brassage à l'homogénéisation du bain de fusion 11, à savoir du bain d'aluminate de calcium en fusion.

En variante, on pourra prévoir que le séchage, la déshydratation et la décarbonatation des fines particules soient initiés lors d'une étape de préchauffage préalable à l'étape a). Selon cette variante, aucune bulle n'est générée dans le bain de fusion 11 dans la mesure où il ne s'y produit pas de décarbonatation.

A l'étape b), après leur séjour dans le bain de fusion 11, les fines particules de matière première étant devenues une masse d'aluminates de calcium 16 liquide, le volume du bain de fusion 11 augmente de sorte que la masse d'aluminate de calcium 16 liquide déborde par l'ouverture de sortie 12 de la cuve 15.

Cette masse d'aluminate de calcium 16 liquide est évacuée par le conduit d'évacuation 13 du système d'évacuation 3 du four 1.

Ainsi, pendant le fonctionnement du four 1, l'introduction des fines particules solides de matière première dans la cuve 15 fait augmenter le volume du bain de fusion 11, et une partie de la masse d'aluminates de calcium 16 liquide présente dans ladite cuve 15 finit par déborder par l'ouverture de sortie 12 de la cuve 15.

Les étapes a) et b) sont toutes les deux réalisées en continu et simultanément.

Ainsi, simultanément, au niveau de l'ouverture d'entrée 9 de la cuve 15, les fines particules solides sont introduites dans la cuve 15 (étape a), et au niveau de l'ouverture de sortie 12, la masse d'aluminate de calcium 16 liquide est récupérée (étape b), sans discontinuer.

Le flux de matière créé entre l'entrée et la sortie du four s'écoule continûment depuis l'entrée vers la sortie.

Les fines particules circulent lentement, du fait de la viscosité du bain de fusion 11, entre l'ouverture d'entrée 9 et l'ouverture de sortie 12. Ainsi elles séjournent dans la cuve 15 suffisamment longtemps pour y fondre et réagir afin d'augmenter la masse d'aluminate de calcium 16 liquide.

Le flux de matière dans la cuve 15, depuis l'ouverture d'entrée 9 vers l'ouverture de sortie 12, est généré par l'évacuation de la masse d'aluminate de calcium 16 via l'ouverture de sortie 12.

Ainsi, de façon remarquable, le procédé selon l'invention permet de fabriquer des aluminates de calcium en continu.

Dans une étape postérieure à l'étape b), l'opérateur fait refroidir la masse d'aluminates de calcium 16 liquide.

Préférentiellement, ce refroidissement s'effectue naturellement, c'est-à-dire à température ambiante dans la zone de refroidissement connectée au système d'évacuation 3.

En variante, on peut prévoir de refroidir la masse d'aluminates de calcium liquide de manière contrôlée. Notamment, on peut prévoir de refroidir la masse d'aluminates de calcium liquide selon tout procédé connu de l'homme du métier, tels que le soufflage par air comprimé, la trempe dans l'eau, ou les procédés utilisés pour la granulation des laitiers de hauts fourneaux ou la production de laine de roche.

Une fois le refroidissement terminé, la masse d'aluminates de calcium 16 se trouve sous forme de clinker. Le clinker est une masse durcie d'aluminate de calcium. En fonction du type de refroidissement choisi, le clinker peut prendre différentes formes et tailles. En général, ce clinker est sous forme de blocs ou de granules dures qui présentent un diamètre allant jusqu'à quelques dizaines de centimètres.

Le clinker ainsi obtenu est ensuite, de préférence, évacué par tapis ou tout autre moyen de convoyage vers un hall, ou un silo, où il sera éventuellement stocké.

Ce clinker peut éventuellement être broyé, plus ou moins finement, pour former un ciment d'aluminate de calcium, à savoir un aluminate de calcium sous forme de poudre qui présente des propriétés hydrauliques actives.

De manière préférentielle, le broyage dudit clinker s'effectue par l'intermédiaire d'un broyeur à boulets (dispositif cylindrique mis en rotation tapissé de plaques de blindage et chargé de boulets d'acier).

En variante, le broyage peut s'effectuer dans des broyeurs à meules verticaux, ou dans tout type de broyeur ayant une résistance à l'usure suffisante et adapté à la réduction à faible diamètre.

Les ciments d'aluminates de calcium ainsi obtenus peuvent être utilisés dans les applications de la chimie du bâtiment ou de la chimie du réfractaire par exemple.

En outre, les ciments d'aluminate de calcium peuvent ensuite subir différents traitements ou être mélangés à d'autres composés. Par exemple, l'ajout d'additifs comme du sulfate de calcium, des cendres volantes, des pouzzolanes, des gypses, sont possibles afin de valoriser le ciment d'aluminates de calcium dans diverses applications.

### Exemples

Les exemples 1 à 4 suivants permettent de rendre compte de l'importance de la teneur en monoxyde de carbone (CO) dans l'atmosphère de l'enceinte pour maîtriser les phases minéralogiques des ciments d'aluminate de calcium obtenus.

En outre, ces exemples prouvent que le procédé selon l'invention permet d'obtenir des aluminates de calcium comprenant une teneur maîtrisée de phase minéralogique C12A7.

Ci-dessous, le tableau 5 présente l'ensemble des conditions expérimentales mises en œuvre pour réaliser les exemples 1 à 4.

En particulier, dans ce tableau 5, la teneur en monoxyde de carbone (CO) est donnée en pourcentage massique, c'est-à-dire en masse de monoxyde de carbone (CO) par rapport à la masse totale des constituants de l'atmosphère.

En outre, le ratio massique Al/Ca correspond à la masse totale d'aluminium rapportée sur la masse totale de calcium, contenues dans l'aluminate de calcium final obtenu. Ainsi, les quantités de matières premières alumineuses et calcaires introduites dans le four sont calculées de manière à respecter ce ratio massique Al/Ca dans le produit final. Avant leur introduction dans les fours, ces matières premières sont mélangées et homogénéisées.

Dans les exemples 1 à 4, les matières premières 7 sont obtenues en mélangeant de façon homogène :
- de la bauxite blanche comportant, en masse par rapport à la masse totale de la poudre de bauxite blanche, 86,5 % d'alumine Al₂O₃, 5,6 % de silice SiO₂, 2,1 % d'oxyde de fer Fe₂O₃, et 0,1 % de perte au feu, avec
- du calcaire comportant, en masse par rapport à la masse totale de la poudre de calcaire, 54,1 % de chaux CaO, et 42 % de perte au feu,
selon un ratio massique bauxite:calcaire de 1:1,68.

La perte au feu regroupe ici les éléments volatils tels que l'humidité résiduelle dans le cas de la bauxite ou le dioxyde de carbone CO2 dans le cas du calcaire.

Les matières premières ainsi introduites en entrée du four permettent d'obtenir un ratio massique chaux sur alumine de l'aluminate de calcium final obtenu en sortie de cuve C/A compris entre 1 et 1,1 (voir tableau 5).

Le diamètre d50 correspond au diamètre médian, donné en micromètres, de l'ensemble des fines particules de matières premières introduites dans les fours. En pratique, dans les exemples 1 à 4, les fines particules de calcaire et de bauxite présentent un diamètre médian d50 de 250 micromètres.

Enfin, le temps de séjour correspond au temps de séjour moyen des fines particules dans le bain de fusion. Il est donné en heure.

Dans l'exemple 1, le four utilisé est un four à combustion. La teneur en monoxyde de carbone (CO) est inhérente à la combustion. Elle est mesurée au niveau de l'ouverture d'évacuation des fumées du four. Les matières premières utilisées sont des bauxites dites blanches, contenant très peu voire pas de fer, c'est-à-dire moins de 10%, de préférence moins de 5%, de fer, et du calcaire.

Dans les exemples 2, 3 et 4, le four utilisé est un four électrique muni d'un système d'adjonction de gaz. Les matières premières utilisées sont également des bauxites blanches et du calcaire.

Dans l'exemple 2, la teneur en monoxyde de carbone (CO) est choisie égale à 100%. Ce monoxyde de carbone (CO) est directement introduit dans le four par le système d'adjonction de gaz.

Dans les exemples 3 et 4, la teneur en monoxyde de carbone est choisie égale à 0%.

Dans l'exemple 3, le système d'adjonction de gaz introduit du diazote (N₂), de sorte que le bain de fusion est placé dans une atmosphère 100% azotée.

Dans l'exemple 4, le système d'adjonction de gaz introduit de l'air à pression atmosphérique, de sorte que le bain de fusion est placé dans l'air.

**Tableau 5**

| | **Exemple 1** | **Exemple 2** | **Exemple 3** | **Exemple 4** |
|---|---|---|---|---|
| **Type de four** | A combustion | Electrique | Electrique | Electrique |
| **Matière première** | - Bauxites blanches, - Calcaire | - Bauxites blanches, - Calcaire | - Bauxites blanches, - Calcaire | - Bauxites blanches, - Calcaire |
| **d50 (µm)** | 250 | 250 | 250 | 250 |
| **Température (°C)** | 1500 - 1600 | 1400 | 1400 | 1400 |
| **Teneur en CO (%)** | 0,1 | 100 | 0 | 0 |
| **Temps de séjour (h)** | 8 | 1 | 1 | 1 |
| **Ratio massique C/A** | 1 - 1,1 | 1 - 1,1 | 1 - 1,1 | 1 -1,1 |

La composition finale des ciments d'aluminates de calcium obtenus est évaluée selon une méthode de diffraction aux rayons X.

Cette méthode de diffraction aux rayons X est décrite plus en détails dans Calcium Aluminate Cernent : Proceeding of the Centenary Conférence Avignon 30 June 2008 «Quantitative mineralogical chemical and application investigations of high Alumina Cements from différent sources » H. Pollmann & Al.

En particulier, la méthode de diffraction aux rayons X employée répond aux normes respectivement française et européenne en vigueur NF EN 13925-1 et EN 13925-1.

La composition du ciment d'aluminate de calcium obtenu dans l'exemple 1, respectivement dans les exemples 2 à 4, est donnée dans le tableau 6, respectivement dans le tableau 7, ci-dessous, en masse par rapport à la masse totale de la composition des ciments :

**Tableau 6**

| **Phases minéralogiques** | **Pourcentages en masse** |
|---|---|
| **CA** | 67,7 |
| (CaO Al₂O₃, ou CaAl₂O₄) | |
| **C2AS** | 22,2 |
| (2 CaO Al₂O₃ SiO₂, ou Ca2 Al₂O₇Si, ou gehlenite) | |
| **C12A7** | 0,3 |
| (12CaO 7Al₂O₃, ou Ca₁₂Al₁₄O₃₃ | |
| Autres | 9,8 |

**Tableau 7**

| Phases minéralogiques et autres composants | **Exemple 2** | **Exemple 3** | **Exemple 4** |
|---|---|---|---|
| **CA** | 59,6 | 66,5 | 67,1 |
| (CaO Al₂O₃) | | | |
| **C2A** | 13,5 | 13,7 | 13,7 |
| (2CaO Al₂O₃, ou Ca₂Al₂O₅) | | | |
| **C12A7** | 15,6 | 7,3 | 5,8 |
| (12CaO 7Al₂O₃, ou Ca₁₂Al₁₄O₃₃) | | | |
| **C3MA2** | 5,9 | 6,0 | 6,0 |
| (3CaO 2Al₂O₃ MgO, ou Ca₃MgAl₄O₁₀) | | | |
| **CT2** | 1,4 | 1,4 | 1,4 |
| (3CaO 2TiO₂, ou Ca₃Ti₂O₇) | | | |
| **C3A** | 1,4 | 3,1 | 3,6 |
| (3CaO Al₂O₃, ou Ca₃Al₂O₆) | | | |
| **C2F** | - | 1,6 | 1,5 |
| (2CaO Fe₂O₃, ou Ca₂Fe₂O₅) | | | |
| **Fe** | 1,4 | - | - |
| **Autres** | 1,2 | 0,4 | 0,9 |

Par ailleurs, dans d'autres exemples de mise en œuvre du procédé selon l'invention, des aluminates de calcium ont été obtenus dans le four de l'exemple 1, à partir des mêmes matières premières que celles utilisées dans l'exemple 1, mais présentant respectivement un diamètre médian d50 de l'ordre de 400 µm et de 2 mm.

Ces aluminates de calcium ne présentaient pas d'infondu en sortie de four, malgré le diamètre médian d50 plus grand des matières premières introduites dans le four.

Dans un dernier exemple de mise en œuvre du procédé selon l'invention, un aluminate de calcium a également été obtenu dans le four de l'exemple 1, à partir de bauxites rouges et de calcaire, toutes les autres conditions expérimentales étant identiques à celles décrites dans l'exemple 1.

Tous les aluminates de calcium obtenus dans les exemples décrits précédemment sont destinés à des applications dans la chimie du bâtiment, ou dans le domaine des bétons réfractaires.

## Revendications

1. Procédé de fabrication d'aluminates de calcium dans un four (1) industriel, selon lequel :
a) on introduit, en continu, dans une cuve (15) en matériau réfractaire contenant un bain de fusion (11) chauffé en permanence, des fines particules d'une matière première source d'alumine (Al₂O₃) et/ou d'aluminium (Al) et d'une matière première source d'oxyde de calcium (CaO) et/ou de calcium (Ca) présentant un diamètre médian d50 inférieur ou égal à 6 000 µm pour faire fondre lesdites fines particules de matière première, et
b) on récupère, en continu, en sortie de cuve (15) une masse d'aluminates de calcium (16) liquide.

2. Procédé de fabrication selon la revendication 1, selon lequel, à l'étape a), le bain de fusion (11) est placé sous une atmosphère réductrice comprenant du monoxyde de carbone (CO).

3. Procédé de fabrication selon la revendication 2, selon lequel, à l'étape a), ladite atmosphère réductrice comprend en moyenne de 0,1% à 100% de monoxyde de carbone (CO).

4. Procédé de fabrication selon l'une des revendications 1 à 3, selon lequel la température du bain de fusion (11) des aluminates de calcium est comprise entre 1 300°C et 1 700°C.

5. Procédé de fabrication selon la revendication 4, selon lequel la température du bain de fusion (11) des aluminates de calcium est comprise entre 1 400°C et 1 600°C.

6. Procédé de fabrication selon l'une des revendications 1 à 5, selon lequel le temps de séjour desdites fines particules de matière première dans ledit bain de fusion (11) des aluminates de calcium est inférieur à 24 heures.

7. Procédé de fabrication selon la revendication 6, selon lequel le temps de séjour desdites fines particules de matière première dans ledit bain de fusion (11) des aluminates de calcium est compris entre 30 minutes et 9 heures.

8. Procédé de fabrication selon l'une des revendications 1 à 7, selon lequel, à l'étape a), la matière première source d'alumine (Al₂O₃) et/ou d'aluminium (Al) introduite dans la cuve (15) est choisie parmi : la bauxite, les meules de corindon, les supports de catalyseur, les briques réfractaires, les hydroxydes, les alumines métallurgiques, les alumines calcinées et fondues, les sous-produits de la filière aluminium et les non conforme de fabrication à haute teneur en alumine ou un de leurs mélanges, et la matière première source d'oxyde de calcium (CaO) et/ou de calcium (Ca) introduite dans la cuve (15) est choisie parmi : le calcaire, la chaux et les sous-produits provenant de procédés consommateurs de calcaire et de chaux comme les laitiers ou scories de sidérurgie ou d'électrométallurgie, ou un de leurs mélanges.

9. Procédé de fabrication selon l'une des revendications 1 à 8, selon lequel les fines particules de matière première présentent un diamètre médian d50 compris entre 100 µm et 1 000 µm.

10. Procédé de fabrication selon la revendication 9, selon lequel les fines particules de matière première présentent un diamètre médian d50 compris entre 150 µm et 500 µm.

11. Procédé de fabrication selon l'une des revendications 1 à 10, selon lequel, après l'étape b), on refroidit la masse d'aluminates de calcium (16) liquide récupérée en sortie de cuve (15).

12. Procédé de fabrication selon la revendication 11, selon lequel le refroidissement s'effectue naturellement ou de manière contrôlée.

13. Procédé de fabrication selon l'une des revendications 11 et 12, selon lequel on broie la masse d'aluminates de calcium (16) refroidie pour former un ciment d'aluminates de calcium.

14. Procédé de fabrication selon l'une des revendications précédentes, selon lequel lesdites fines particules de matière première source d'alumine (Al₂O₃) et/ou d'aluminium (Al) et de matière première source d'oxyde de calcium (CaO) et/ou de calcium (Ca) sont introduites dans la cuve (15) sous la forme d'une poudre libre.

## Patentansprüche

1. Verfahren zur Herstellung von Calciumaluminaten in einem industriellen Ofen (1), wobei:
a) in einen Behälter (15) aus feuerfestem Material, welcher ein permanent erhitztes Schmelzbad (11) enthält, feine Partikel eines Ausgangsmaterials, welches eine Quelle für Aluminiumoxid (Al₂O₃) und/oder Aluminium (Al) ist, und eines Ausgangsmaterials, welches eine Quelle für Calciumoxid (CaO) und/oder Calcium (Ca) ist, kontinuierlich eingeführt werden, welche einen mittleren Durchmesser d50 kleiner oder gleich 6000 µm aufweisen, um die feinen Partikel von Ausgangsmaterial zu schmelzen, und
b) am Auslass des Behälters (15) eine Masse flüssiger Calciumaluminate (16) kontinuierlich gewonnen wird.

2. Verfahren zur Herstellung nach Anspruch 1, wobei in Schritt a) das Schmelzbad (11) unter eine reduzierende Atmosphäre gebracht wird, welche Kohlenmonoxid (CO) aufweist.

3. Verfahren zur Herstellung nach Anspruch 2, wobei in Schritt a) die reduzierende Atmosphäre durchschnittlich von 0,1 % bis 100 % Kohlenmonoxid (CO) aufweist.

4. Verfahren zur Herstellung nach einem der Ansprüche 1 bis 3, wobei die Temperatur des Schmelzbades (11) der Calciumaluminate zwischen 1300 °C und 1700 °C liegt.

5. Verfahren zur Herstellung nach Anspruch 4, wobei die Temperatur des Schmelzbades (11) der Calciumaluminate zwischen 1400 °C und 1600 °C liegt.

6. Verfahren zur Herstellung nach einem der Ansprüche 1 bis 5, wobei die Verweilzeit der feinen Partikel von Ausgangsmaterial in dem Schmelzbad (11) von Calciumaluminaten weniger als 24 Stunden beträgt.

7. Verfahren zur Herstellung nach Anspruch 6, wobei die Verweilzeit der feinen Partikel von Ausgangsmaterial in dem Schmelzbad (11) von Calciumaluminaten zwischen 30 Minuten und 9 Stunden liegt.

8. Verfahren zur Herstellung nach einem der Ansprüche 1 bis 7, wobei in Schritt a) das in den Behälter (15) eingeführte Ausgangsmaterial, welches die Quelle für Aluminiumoxid (Al₂O₃) und/oder Aluminium (AI) ist, ausgewählt ist aus: Bauxit, Korundschleifsteinen, Katalysatorträgern, feuerfesten Ziegeln, Hydroxiden, metallurgischen Aluminiumoxiden, kalzinierten und geschmolzenen Aluminiumoxiden, Nebenprodukten der Aluminiumindustrie, und den mit der Herstellung nicht konformen Stoffen mit einem hohen Gehalt an Aluminiumoxid, oder einer Mischung davon, und das in den Behälter (15) eingeführte Ausgangsmaterial, welches die Quelle für Calciumoxid (CaO) und/oder Calcium (Ca) ist, ausgewählt ist aus: Kalkstein, Kalk und Nebenprodukten aus Prozessen, welche Kalkstein und Kalk verbrauchen, wie Schlacken oder Schlacken aus der Stahl- oder Elektrometallurgieindustrie, oder einer Mischung davon.

9. Verfahren zur Herstellung nach einem der Ansprüche 1 bis 8, wobei die feinen Partikel von Ausgangsmaterial einen mittleren Durchmesser d50 zwischen 100 µm und 1000 um haben.

10. Verfahren zur Herstellung nach Anspruch 9, nach dem die feinen Partikel von Ausgangsmaterial einen mittleren Durchmesser d50 zwischen 150 µm und 500 µm aufweisen.

11. Verfahren zur Herstellung nach einem der Ansprüche 1 bis 10, wobei nach Schritt b) die am Auslass des Behälters (15) gewonnene Masse von flüssigem Calciumaluminaten (16) abgekühlt wird.

12. Verfahren zur Herstellung nach Anspruch 11, wobei die Abkühlung auf natürlicher oder kontrollierter Weise erfolgt.

13. Verfahren zur Herstellung nach einem der Ansprüche 11 und 12, wobei die abgekühlte Masse von Calciumaluminaten (16) gemahlen wird, um einen Calciumaluminatzement zu bilden.

14. Verfahren zur Herstellung nach einem der vorhergehenden Ansprüche, wobei die feinen Partikel von Ausgangsmaterial, welches die Quelle für Aluminiumoxid (Al₂O₃) und/oder Aluminium (AI) ist, und von Ausgangsmaterial, welches die Quelle für Calciumoxid (CaO) und/oder Calcium (Ca) ist, in Form eines losen Pulvers in den Behälter (15) eingeführt werden.

## Claims

1. Method for manufacturing calcium aluminates in an industrial furnace (1), according to which:
a) continuously, fine particles of a raw material source of alumina (Al₂O₃) and/or of aluminium (Al) and of a raw material source of calcium oxide (CaO) and/or of calcium (Ca) having a median diameter d50 smaller than or equal to 6,000 µm are introduced into a tank (15) made of refractory material containing a molten pool (11) that is continuously heated, in order to melt said fine particles of raw material, and
b) continuously, a mass of liquid calcium aluminates (16) is gathered at the outlet of the tank (15).

2. Manufacturing method according to claim 1, according to which, in step a), the molten pool (11) is placed under a reducing atmosphere comprising carbon monoxide (CO).

3. Manufacturing method according to claim 2, according to which, in step a), said reducing atmosphere comprises from 0.1% to 100% of carbon monoxide (CO) on average.

4. Manufacturing method according to one of claims 1 to 3, according to which the temperature of the molten pool (11) of the calcium aluminates is comprised between 1,300°C and 1,700°C.

5. Manufacturing method according to claim 4, according to which the temperature of the molten pool (11) of the calcium aluminates is comprised between 1,400°C and 1,600°C.

6. Manufacturing method according to one of claims 1 to 5, according to which the residence time of said fine particles of raw material in said molten pool (11) of calcium aluminates is less than 24 hours.

7. Manufacturing method according to claim 6, according to which the residence time of the said fine particles of raw material in said molten pool (11) of calcium aluminates is comprised between 30 minutes and 9 hours.

8. Manufacturing method according to one of claims 1 to 7, according to which, in step a), the raw material source of alumina (Al₂O₃) and/or of aluminium (Al) introduced into the tank (15) is chosen from: bauxite, corundum grinding wheels, catalyst supports, refractory bricks, hydroxides, metallurgical aluminas, calcinated and melted aluminas, the by-products of the aluminium sector and manufacturing non-conformities with a high alumina content, or one of the mixtures thereof, and the raw material source of calcium oxide (CaO) and/or of calcium (Ca) introduced into the tank (15) is chosen from: limestone, lime and the by-products coming from methods that consume limestone and lime such as slurries or slags in steelmaking or electrometallurgy, or one of the mixtures thereof.

9. Manufacturing method according to one of claims 1 to 8, according to which the fine particles of raw material have a median diameter d50 comprised between 100 µm and 1,000 µm.

10. Manufacturing method according to claim 9, according to which the fine particles of raw material have a median diameter d50 comprised between 150 µm and 500 µm.

11. Manufacturing method according to one of claims 1 to 10, according to which, after step b), the mass of liquid calcium aluminates (16) gathered at the outlet of the tank (15) is cooled down.

12. Manufacturing method according to claim 11, according to which the cooling is performed naturally or in a controlled manner.

13. Manufacturing method according to one of claims 11 and 12, according to which the cooled mass of calcium aluminates (16) is crushed in order to form a calcium aluminate cement.

14. Manufacturing method according to one of the preceding claims, according to which said fine particles of raw material source of alumina (Al₂O₃) and/or of aluminium (Al) and of raw material source of calcium oxide (CaO) and/or of calcium (Ca) are introduced into the tank (15) in the form of a free powder.
